# EUROPEAN PATENT APPLICATION

(11) **EP 4 804 182 A1**
(43) Date of publication of application: **09.09.2026**
(21) Application number: 25223453.9
(22) Date of filing: 15.12.2025
(51) Int. Cl.: G10L 15/22, G06V 40/16, G10L 25/63

(54) **METHOD AND SYSTEM FOR ADAPTIVELY ACQUIRING IMAGE DATA FOR PERSONALIZED SPEECH DIALOGUES**

(30) Priority: 05.03.2025 TW 114108026
(71) Applicant: Playsee Inc., KY1 -1208 West Bay Grand Cayman (KY)
(72) Inventor: LI, Yu-Hsien, 116 Taipei City (TW)
(74) Representative: Durán-Corretjer, S.L.P.

(57) **Abstract**

A method and a system for adaptively acquiring image data for personalized speech dialogue. In the method, the system receives speech data generated by a user in real time from a user device (100) and extracts speech features from the speech data. A natural language processing model is used to recognize semantic meaning in the speech features. The system then determines that an image is required to be provided. A function of photographing images in the user device (100) is activated for acquiring image data. Both the speech features and image features are referred to for generating corresponding speech dialogue. After repeatedly the above steps such as receiving speech data generated by the user from the user device (100), extracting speech features, receiving image data generated by the user device (100), and extracting image features, the speech dialogues based on the speech features and the image features can be continuously generated.

## Description

### FIELD OF THE INVENTION

The present invention relates to a personalized intelligence speech dialogue technology, and more particularly to a method for adaptively acquiring image data for personalized speech dialogues and a system that uses real-time image data and a language model to obtain personalized information a method for adaptively acquiring image data for personalized speech dialogues.

### BACKGROUND OF THE INVENTION

One of the artificial intelligence (AI) technologies that are in rapid development in various fields is a natural language chatbot. Natural language chatbots such as ChatGPT (Chat Generative Pre-Trained Transformer) developed by OpenAl, Inc. are capable of processing natural language and automatically generating the related content. In general, the natural language chatbot uses a generative AI technology that is firstly trained on a huge amount of data to generate new data being correlated with the original data. An intelligence model can be established after a deep-learning process, for example, using generative adversarial networks (GAN).

With the example of ChatGPT, ChatGPT is trained by learning a huge amount of network data and can be used to have conversations with a user in natural language. However, it is common for ChatGPT to answer the user with standard responses that are obtained through a learning process, but ChatGPT fails to respond immediately for providing answers relevant to a current state of the user. The natural language chatbot lacks contents that are relevant to the user and consistent with the current state of the user, namely, the conversation services provided by ChatGPT are general but not the personalized speech dialogues that are based on personalized requirements, preferences and backgrounds.

### SUMMARY OF THE INVENTION

In response to the above-referenced technical inadequacies of a conventional chatbot, for the purpose of providing a speech dialogue model capable of outputting speech according to a personal requirement and learned personal preference, provided in the present invention is a method for adaptively acquiring image data for personalized speech dialogues and a system thereof.

In an aspect, a system that operates the method for adaptively acquiring image data for personalized speech dialogues includes a cloud server that connects with a user device. The user device can receive speech generated by the user via a human-machine interface and images of environment and the user captured by a camera. After learning the personalized speech and image features, the cloud server provides the user the personalized speech dialogue service via a dialogue interface and also performs the method for adaptively acquiring image data for personalized speech dialogues by one or more processors.

In the method for adaptively acquiring image data for personalized speech dialogues operated in the cloud server, the cloud server receives a speech data generated by the user in real time via the user device and extracts current speech features of the user. Semantics of the speech features can be recognized by a natural language processing model. After determining that images are required to be captured, a function for capturing the images in the user device is activated for obtaining an image data. The speech dialogues can be generated based on the speech features and image features. After repeatedly receiving the speech data generated by the user device, extracting the speech features, receiving the image data generated by the user device and extracting the image features, the speech dialogues can be continuously generated based on the speech features and the image features.

Further, in addition to obtaining semantics of the speech features, the speech features can be referred to for learning the user's current emotion and generating the speech dialogues based on both the semantics and the user's current emotion.

The speech features include pitches, changes of rhythms and variations of sound intensities of speeches transmitted from the user device.

Further, the personalized speech dialogues can be generated based on the required pitches, changes of rhythms, and variations of sound intensities of speeches that can be obtained by querying an emotion database.

Still further, when a subject of dialogues relating to environmental information is determined according to the semantics of the user, a function for capturing images in the user device is activated for capturing environmental images of the user.

The image features can be extracted from the image data of the environment of the user, so that the environmental features can be determined for correspondingly generating further speech dialogues based on the environmental features.

Alternatively, a subject of dialogues relating to the user can be determined based on the semantics of the user, a selfie function in the user device can be activated for capturing the images of the user. The image features can be extracted from the image data generated from the selfie images of the user. The image features can be referred to for determining the user's current emotion or needs and correspondingly generating further speech dialogues based on the user's current emotion or needs.

Further, in the cloud server, a deep-learning method is performed to learn the user's interests and personality based on the speech data and the image data in past and present that are continuously received from the user device so as to establish a user profile.

When the user's current speech features, the semantics and image features are immediately obtained, the user profile can be obtained according to an identification data of the user. The semantics, the user profile, and/or the instant environmental information are referred to for generating corresponding speech dialogues.

Further, the cloud server acquires a simulated object generated by an AI simulation model from a database. Then the image signals and model data are transmitted to the user device, the simulated object can be rendered and displayed on the user device. The simulated object is able to immediately generate speech dialogues.

The simulated object can be a simulated humanoid chatbot. The cloud server can provide options of multiple simulated humanoid chatbots via an interactive interface initiated by a web server.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram depicting a circumstance that performs personalized speech dialogues when adaptively acquiring images in one embodiment of the present invention;
Fig. 2 is a schematic diagram depicting a system framework that operates a method for adaptively acquiring image data for personalized speech dialogues according to one embodiment of the present invention;
Fig. 3 is schematic diagram illustrating the method for adaptively acquiring image data for personalized speech dialogues according to one embodiment of the present invention;
Fig. 4 is a flowchart illustrating the method for adaptively acquiring image data for personalized speech dialogues according to one embodiment of the present invention;
Fig. 5 is another flowchart illustrating the method for adaptively acquiring image data for personalized speech dialogues according to another embodiment of the present invention;
Fig. 6 is a schematic diagram depicting a scene where the method for adaptively acquiring image data for personalized speech dialogue is performed according to one embodiment of the present invention; and
Fig. 7 is a schematic diagram depicting another scene where the method for adaptively acquiring image data for personalized speech dialogue is performed according to another embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

For providing an individual speech dialogue service for each of users and employing a simulated humanoid chatbot to proceed natural language dialogues, provided in the present invention is a method for adaptively acquiring image data for personalized speech dialogues and a system.

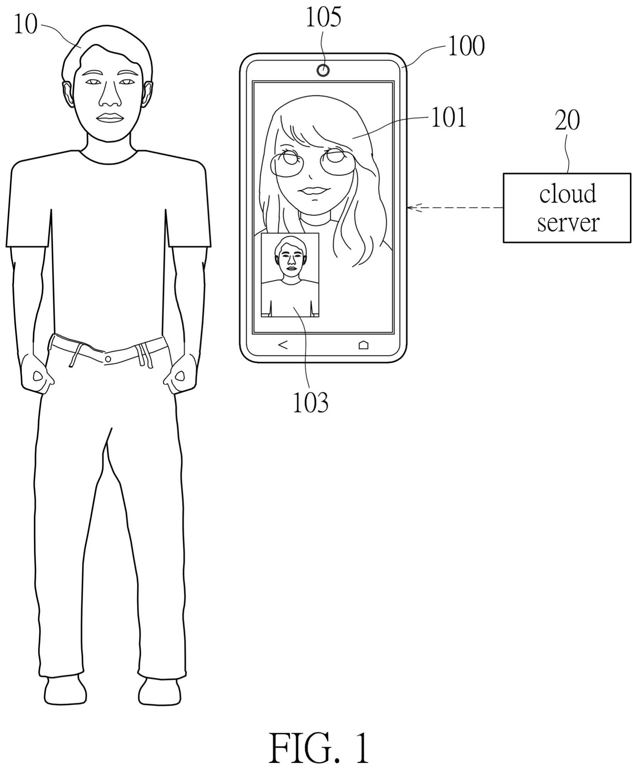

Reference is made to Fig. 1, which is a schematic diagram depicting a circumstance where a personalized speech dialogue service using image data is provided according to one embodiment of the present invention. The system providing the personalized speech dialogue service includes a cloud server 20. The cloud server 20 provides a user 10 and a generative artificial intelligence (AI) a simulated humanoid chatbot 101 that is generated by learning knowledges, speeches, behaviors and emotional expressions of humans through a machine-learning algorithm to proceed a natural language dialogue service. More specifically, an intelligence model being operated behind the simulated humanoid chatbot 101 is configured to learn of an audio frequency and a speech rate of a current dialogue of the user 10, and also learn image features, so that the simulated humanoid chatbot 101 can proceed dialogues with corresponding audio frequency and speech rate that can appropriately reflect a current emotion and environment of the user 10. It should be noted that the semantics and emotion of the user 10 can be determined according to both the speech features and image features.

For example, when the intelligence model analyzes pitches, changes of rhythms and variations of intensity in the speech data to determine a current emotion of the user 10, for example, a sad emotion, the simulated humanoid chatbot 101 can adjust an audio frequency and a speech rate of speech for appropriately reflecting the current sad emotion of the user 10. Further, the intelligence model can rely on the image features to determine the states of the user or the current environment, and to provide the speech dialogues that can reflect the current circumstance.

The diagram schematically shows that the user 10 manipulates an application executed in a user device 100. For example, a dialogue interface can be initiated in the application and can be used to connect with the cloud server 20. Then, the user device 100 is used to load a selected simulated humanoid chatbot 101 including a model data and image signals of the simulated humanoid chatbot 101 from the cloud server 20. Just like two people engaging a video chat in the real world, a camera 105 of the user device 100 is activated and a dialogue interface is initiated on a display of the user device 100 that shows that a user image 103 representative of the user and the simulated humanoid chatbot 101 are in dialogue.

When proceeding the personalized dialogue service, the user device 100 connects with the cloud server 20, an audio function (e.g., a microphone) and a video function (e.g., a camera) of the user device 100 are activated for recording audio and capturing images in real time. The speech data and the image data can be uploaded to the cloud server 20 in real time. A language model and an image model operated in the cloud server 20 can be used to extract the speech features or also the image features. Further, current environmental information can also be included. An intelligence model can therefore be used to determine a current emotion of the user 10 and output a speech dialogue. It should be noted that the user's emotion can be determined by analyzing pitches, changes of rhythms, variations of sound intensities and semantic meaning in each of sections of the speed data using the intelligence model. Further, the facial expressions can also be determined based on the facial images to be acquired.

It should be noted that, when the language model generates speech dialogues, a related audio data is configured to be transmitted to the user device 100 and then displayed on the dialogue interface through a textualization process in one of the embodiments of the present invention. The speech dialogue can be either emitted by a loudspeaker of the user device 100 or simulatively spoken by the simulated humanoid chatbot 101 via the dialogue interface. The artificial intelligence technology operated in the user device 100 can generate speeches and facial expressions based on current emotions of the user. For example, mouth movements of a simulated character to be generated can simulate the mouth movements of a human when he is speaking, and the movements of facial muscles of the human can also be configured to match the emotion expressed by the current speeches.

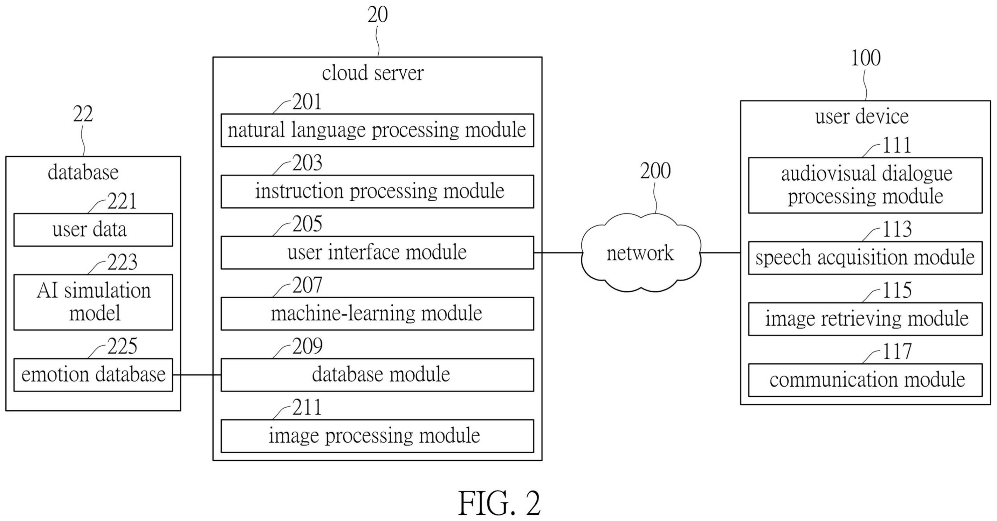

The cloud server 20 implements the method for adaptively acquiring image data for personalized speech dialogues, in which various Al algorithms and models can be operated through collaboration of software and hardware. Reference is made to Fig. 2, which is a schematic diagram depicting a system framework of the system according to one embodiment of the present invention.

The cloud server 20 implements various functional modules through collaboration of a processing circuit, a memory and software of the computer system. The functional modules are such as a natural language processing module 201 that is used to process the dialogues with the user; an instruction-processing module 203 that can provide a corresponding service based on a requirement submitted by the user via the dialogue interface; and a user interface module 205 that interfaces with a user interface initiated by a specific application executed in the user device and is used to generate an interface for having dialogues with the user. The cloud server 20 further includes a machine-learning module 207 that is used to train a natural language module based on the user's requirement, a database module 209 that is used to provide a built-in or an external database, and an image processing module 211 that is configured to process the image data.

The cloud server 20 includes a built-in or an external database 22 that essentially includes user data 221 and Al simulation models 223 that can generate multiple simulated objects, and also an emotion database 225 that is established through big-data analysis. The emotion database 225 stores the data of audio frequencies, speech rates and wordings that correspond to various emotions and is used for the simulated object to use instructions to query dialogues corresponding to a specific emotion. The cloud server 20 provides the personalized speech dialogue service for users via a network 200. The user can manipulate the user device 100 to access services of the cloud server 20 over the network 200 by an application executed in the user device 100.

In various embodiments of the present invention, the system provides software programs to be executed in the user device 100 for operating functional modules such as an audiovisual dialogue processing module 111 used to proceed interactive audiovisual dialogues with the simulated object, a speech acquisition module 113 used to receive speech signals from the user, an image retrieving module 115 used to capture images of the user or environment, and a communication module 117 used to establish a connection with an external system such as the cloud server 20.

The database module 209 of the cloud server 20 is configured to access and manage a built-in or an external database 22. The database module 209 also maintains the user data 221 that is generated when the user uses the personalized speech dialogue service. The database module 209 also provides a simulated object that is generated by an Al simulation model 223. The simulated object can be a humanoid object. The humanoid object can be any of simulated humanoid chatbots that may be in various fields provided by multiple users. Therefore, the cloud server 20 can provide multiple types of the simulated humanoid chatbots.

In certain embodiments of the present invention, the database 22 of the cloud server 20 provides the simulated objects that are generated by the AI simulation model 223. The AI simulation model 223 can be used to generate multiple simulated humanoid chatbots that can be humanoid robots, animal robots or the robots of various forms. In addition to simulating different appearances and accents of the simulated humanoid chatbots, the simulated humanoid chatbots can also be assigned with various expertise so as to provide the users with personalized speech dialogue services based on the users' requirements. It should be noted that, in the method for adaptively acquiring image data for personalized speech dialogues, the AI simulation model 223 can be used to generate the natural language dialogues for the simulated object. The AI simulation model 223 can employ a generative artificial intelligence technology to establish a simulated character generative model by learning a huge amount of character data using a machine-learning algorithm. Further, the AI simulation model 223 uses a generative artificial intelligence technology based on a three-dimensional rendering technology to generate images and generate a specific simulated object according to the user's requirement, for example, based on prompts made by the user.

Further, for giving the simulated humanoid chatbot a professional background, a machine-learning algorithm is used to learn the data in specific field so as to establish an intelligence model in the field. In an exemplary example, a retrieval augmented generation (RAG) technology based on a large language model (LLM) is used to implement a natural language model for the specific field.

When the user manipulates the user device 100, a software sequence executed in the user device 100 generates a dialogue request to the cloud server 20. The instruction-processing module 203 of the cloud server 20 is used to process the various requests (e.g., a request for conducting dialogues, a request for selecting the simulated humanoid chatbot that performs the personalized speech dialogue service, and the other requests produced in the speech dialogues) transmitted from the user device 100.

The user interface module 205 of the cloud server 20 is used to transmit various messages such as audiovisual contents, texts and images to the user device 100, or perform the requisite processes such as an encoding process, a decoding process, a compressing process and a decompressing process on the messages. The user interface module 205 is also used to process the dialogues to be displayed on the dialogue interface between two or more parties and generate various functions and graphs on the dialogue interface.

The image processing module 211 is configured to process the image data transmitted from the user device 100. The image data includes either the image of the user or the images of the environment relating to the user can be provided for the cloud server 20 to learn the current circumstance of the user. In the cloud server 20, the machine-learning module 207 operates a machine-learning algorithm that applies a neural network deep-learning technology to learn the speech features of the user and implements a speech model through a training process performed on a huge amount speech data. A natural language processing model (NLP model) is accordingly established. The natural language process model is used to extract speech features from the speech data and obtains semantic meaning from the speech features so as to generate the responsive dialogues. Further, the machine-learning module 207 operates the machine-learning algorithm to learn a huge amount of facial image features of users so as to establish an image model that is trained to learn expressions and emotions of the users. Thus, in addition to determining the user's emotion based on the speech features, the cloud server 20 can use the image model to process the image features for assisting in determining the user's emotion.

The cloud server 20 applies a natural language processing module 201 to deal with the speech data from the user device 100. In addition to textualizing the speech data, the cloud server 20 operates a natural language processing model to extract speech features of the speech data, recognize semantic meaning, extract image features from the image data so as to identify information relating to the user or the environment, generate a speech dialogue and then respond to the user in a natural language.

Further, in the process of obtaining the semantic meaning and determining the user emotion, the speech features in use includes pitches, changes of rhythms and variations of sound intensities of the speech data. The speech model relies on these speech features (e.g., acoustic waveform characteristics) to identify a current emotion of the user. The speech model can also learn the user's personality and preference over a long period of time so as to create a user profile. Similarly, the corresponding image model can identify changes of a physical object (e.g., facial features of the user) according to changes of pixels of the image data, correlations among the objects in the images, and physical objects being recognized in the images. The emotion of the user can be actually determined based on a long-term learning process on relationship between the user's behaviors and emotions. A user profile can therefore be established based on the speech features and the image features.

A machine-learning algorithm operated in the computer system is used to learn correlations of human languages, classifications, deep-learning language structure, and sentences of the languages so as the establish the natural language processing model. In the method of the present invention, the speech data generated from user dialogues are used to train the natural language processing model so as to form a personalized language model. Further, after the personalized language model is established by training the natural language processing model, a deep-learning algorithm can also be used to learn pitches, rhythms and intensity variations of the speech data for identifying the user's emotion in the speech.

It should be noted that the system uses a large language model (LLM) that can be a multimodal model used to process different types of data (e.g., texts, pictures and audios) and can integrate various types of data to establish an intelligent model for predicting behaviors of the user.

The natural language processing module 201 does not simply use any natural language search and dialogue service that may be implemented by a conventional large language model (LLM) such as ChatGPT, because the conventional ChatGPT can only reply one-way in a dialogue with the user, rather than learning the current emotion of the user or referring to environmental information. Therefore, the natural language processing module 201 can use the user profile, the current semantic meaning, and real-time environmental information (e.g., a current location, an instant weather and time) to enable the simulated humanoid chatbot to proceed dialogues in response to the current emotion of the user. Therefore, the simulated humanoid chatbot can generate the dialogues being consistent with a current need of the user. In certain embodiments of the present invention, the simulated humanoid chatbot outputs the dialogues consistent with the current emotion of the user based on an audio frequency, a speech rate and wordings that correspond to the emotion and can be obtained by querying the emotion database 225.

For example, the system acquires a geographic location of a user (e.g., positioning information obtained from an application) and a weather (e.g., cold day, hot day, sunny day or rainy day) based on environmental information when it is at noon, and a simulated humanoid chatbot can actively suggest an appropriate restaurant according to a user preference. After that, the user can respond to the suggestion with whether or not he wants to eat, an acceptable meal price, or other requests. The simulated humanoid chatbot can accordingly adjust its suggestion immediately or conduct dialogues to confirm requirements of the user.

In one of the embodiments of the present invention, in the machine-learning algorithm that determines a current emotion of the user according to facial image features of the user, a supervised machine learning algorithm can be adopted for learning changes of image features that are labeled manually under different emotions. For example, the image features may include changes in distance ratios, changes of lines, changes of shapes and changes of colors of facial features or specific parts of the user, by which an image model can be trained for determining the user's emotion based on the image features. Thus, in the cloud server 20, the speech model and the image model can be used together for determining the user's emotion, and then the natural language processing module 201 and the image processing module 211 are used to obtain semantic meaning of the speech features, environmental information and the image features for generating dialogues. An audio frequency, a speech rate and wordings of the dialogues can also be obtained by querying the emotion database 225.

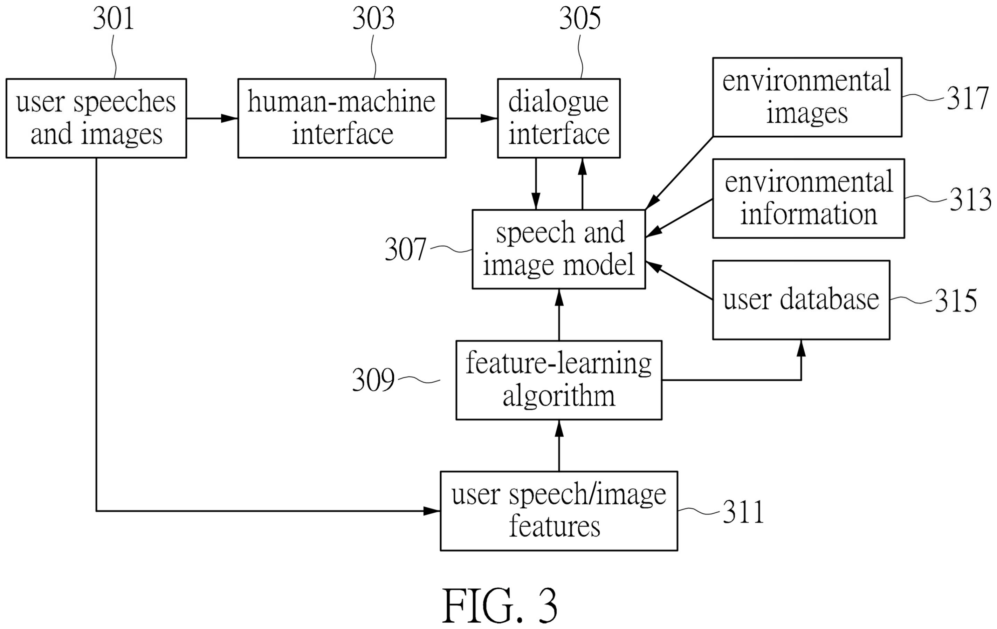

Based on the above-described system framework for providing image-based personalized speech dialogue service and the method, reference is made to Fig. 3, which is a schematic diagram illustrating the method for method for adaptively acquiring image data for personalized speech dialogues according to one embodiment of the present invention.

A user-end human-machine interface 303 is used to convert user speeches and images 301 into texts displayed on a dialogue interface 305 or into spoken speeches. The above-described cloud server can be used to receive the texts or the speech data. The user manipulates an application executed in the user device to send a request to the cloud server for the personalized speech dialogue service. The cloud server can then provide the personalized speech dialogue service to the user via the dialogue interface 305.

In the cloud server, one or more processors of the computer system are used to perform the method for adaptively acquiring image data for personalized speech dialogues and a system for acquiring the user speeches and images 301 generated by the user device via the dialogue interface 305. According to certain embodiments of the present invention, various sensors of the user device can be used to obtain the speeches and image data of the user. In an exemplary example, after the dialogue interface 305 is initiated in the user device, a microphone is activated for receiving the speeches made by the user at the same time, and a camera is activated for capturing facial images of the user. The user speeches or inputted texts can be generated via the human-machine interface 303 and displayed on the dialogue interface 305 for interacting with the simulated object, for example, with natural language dialogues.

The speech and image data are transmitted from the user device to the cloud server. The models operated in the cloud server can be divided into a speech model and an image model. The speech model is used to textualize the speech data into texts and afterwards extract semantic meaning from the speech data for determining the user's emotion. The image model can be used to analyze the image data for extracting facial features of the user. For example, the image model is used to analyze the image data for obtaining changes of colors, light and shadow of the pixels with respect to the facial features of the user, so that the changes of images of mouth, eyes or specific facial parts can be obtained. For example, the pixels of the facial features can be used to identify geometric relationships between the facial features or the specific parts. The user's current emotion can also be determined according to the geometric relationships between the facial features of the specific parts, the semantic meaning and the speech features.

Further, a speech and image model 307 can acquire the instant environment information 313 from an external database or a server. In certain embodiments of the present invention, after the cloud server and the user device are connected, location information of the user device can be obtained so as to determine geographic location of the user. The environmental information 313 such as local weather, nearby store opening information, geographical information and local festivals based on the location and time relating to the user can be obtained from an external database for the sake of providing effective contents to the user. While the cloud server operates the speech and image model 307, a user profile is retrieved from a user database 315, by which a basic data of the user, a user preference and historical records can be obtained. Further, the method of the present invention can adaptively acquire the image data that can be the environmental images 317 surrounding the user and can be captured by a camera of the user device. After the environmental images 317 are processed by the speech and image model 307, an instant state such as the user's clothing, people or articles around the user can be determined and can be referred to for generating the personalized speech dialogues. Further, the cloud server uses the user database 315 to store and update user data having historical dialogue records of each of users in accordance with a time dimension.

The cloud server uses the speech and image model 307 to effectively provide the personalized speech dialogue service for the users. When the user proceeds with the personalized speech dialogues, the cloud server continuously receives user speech/image features 311 and performs a feature-learning algorithm 309 so as to continuously learn the speech data and image data generated in the dialogues, by which the speech and image model 307 can be updated and optimized.

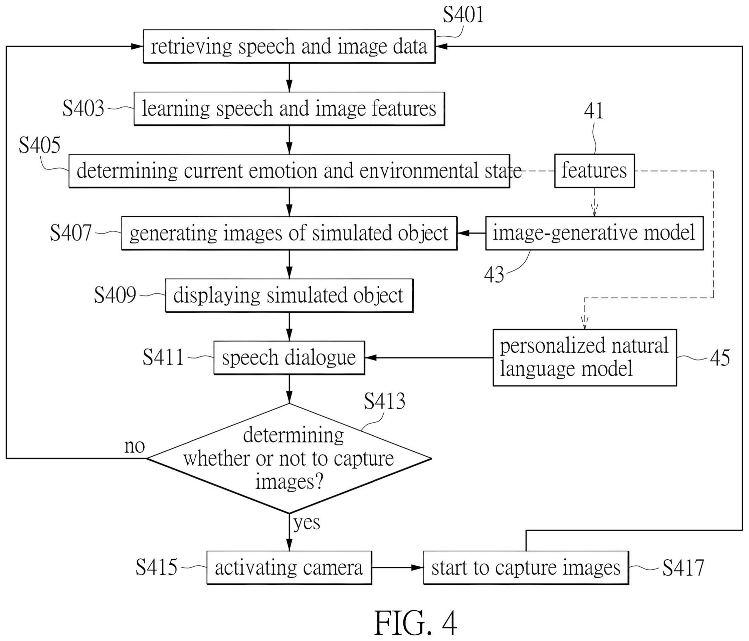

Based on the above-described system framework and operations of the system, reference is made to Fig. 4, which is a flowchart illustrating the method for adaptively acquiring image data for personalized speech dialogues according to one embodiment of the present invention.

While the cloud server operates the method for providing a personalized speech dialogue service, the user manipulates the user device to execute one of the applications to establish a connection with the cloud server. A dialogue interface is initiated by the application. The application is configured to receive the speech data (or including image data) generated by the user who makes the speech in real time using sensors such as a microphone and/or a camera via the dialogue interface (step S401). Next, the application is configured to learn speech features (or including image features) of the speech made by the user. The speech features can include pitches and changes in rhythms and variations of sound intensities of the speech data transmitted by the user device. The image features can include the image of the user or the images of the environment relating to the user (step S403). After that, semantic meaning can also be recognized from the speech features. In certain embodiments of the present invention, when the speech data generated by the user who makes the speech is received in real time and the image data about the user is also received, the speech features (including semantic meaning) and the image features can be used together for learning the user's current emotion, or a current state of the environment (step S405).

In one of the embodiments of the present invention, when the speech features are obtained, the image features are also extracted from the image data. The speech features and/or image features 41 are submitted to an image-generative model 43 operated in the cloud server for generating image changes of facial expressions, mouth, and specific parts of a simulated humanoid chatbot, and also submitted to a personalized natural language model 45 for generating speech dialogues from the speech features and/or image features 41 in accordance with the user's current emotion.

In the step S405 of obtaining the current emotion of the user, the cloud server uses a natural language processing model to recognize semantic meaning of the speech features and determine environmental information when extracting the image features, the semantic meaning and the current environmental information (e.g., including the environmental data provided by an external system) are referred to for generating the speech dialogues based on the user's current emotion, in which the speech dialogues are also used to respond to the user's real-time speech.

Further, the cloud server uses an image-generative model 43 to generate images of a simulated object according to the speech features and/or image features, or the simulated objected selected by the user (step S407), and the simulated object can be displayed on the dialogue interface displayed on a display of the user device (step S409). The language model personalized natural language model 45 can then be used to generate the dialogue contents based on the semantic meaning, the current emotion and/or environmental information of the user so as to proceed dialogues with the user (step S411). For example, the simulated object can be a simulated humanoid chatbot. The images of the simulated object can be used to reflect images of facial expressions, mouth and some specific parts of the user.

When the speech dialogues are in progress, a natural language model 45 of the cloud server continuously operates for determining whether or not to capture images based on the semantics formed in the dialogues (step S413). If it is determined that it is not necessary to use images (representative of "no"), the process goes back to step S401 for repeating the above steps.

Otherwise, if it is determined that the images are required based on the semantics (representative of "yes"), the cloud server drives the function of capturing images in the user device to be activated via a human-machine interface by the user interface module (e.g., user interface module 205 of Fig. 2). For example, a main camera or a front camera can be activated to capture images as required (step S415) so as to generate the image data (step S417).

The cloud server continuously acquires the speech features and the image features. After the speech features and the image features are processed by the natural language model 45, the simulated humanoid chatbot displayed on the user device correspondingly generates the speech dialogues. Thus, after repeating the above steps, the cloud server can continuously receive speech data and/or the image data, extract the speech features and/or the image features, and learn the user's current emotion so as to continuously generate the speech dialogues.

According to one embodiment of the present invention, in the above-described step S415, taking a handheld mobile device as an example, when the system determines that the subject of dialogues is directed to environmental information based on the semantics of the dialogues, the main camera of the mobile device is activated by a software program executed in the user device for capturing images of the environment around the user. Therefore, the system can obtain the image data of the environment around the user, and extract image features by an image-processing process. The natural language model can be performed on the image features so as to determine environmental features. The system can then generate further speech dialogues based on the environmental features and can display corresponding images.

According one further embodiment of the present invention, in the above-described step S415, when it is determined that the subject of dialogues is directed to the user based on the semantics of the user, the front camera of the user device can be activated for capturing images of the user. Similarly, the system can extract image features from the image data of the user. The image features are referred to for determining the user's current emotion or needs and correspondingly generating the speech dialogues based on the emotion or the needs. The images corresponding to the emotion or the needs can be displayed.

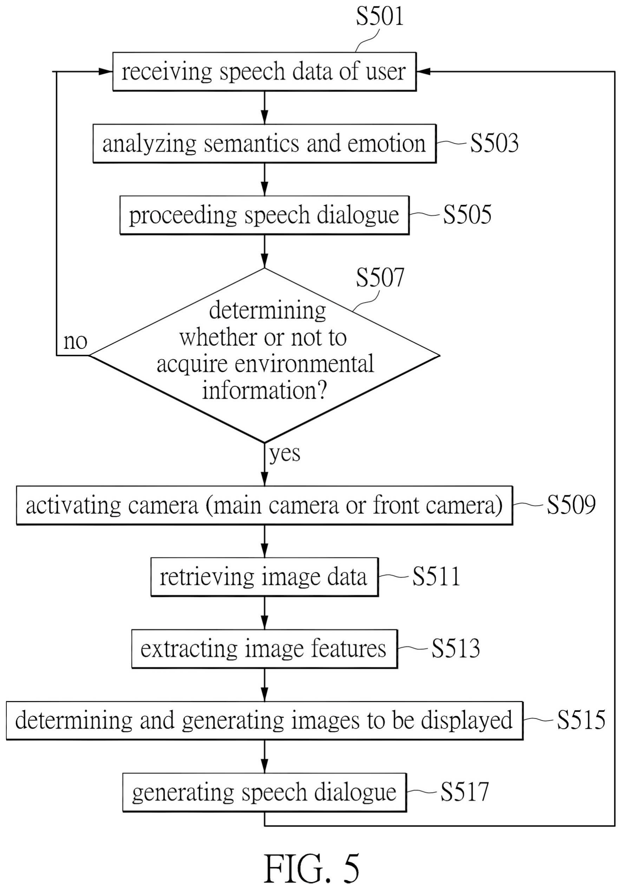

Reference is made to Fig. 5, which is another flowchart illustrating the method for adaptively acquiring image data for personalized speech dialogues according to another embodiment of the present invention.

The system receives the speech data from the user device via a dialogue interface (step S501) and analyzes the speech features by a natural language model for determining the semantics and the user's emotion (step S503). Therefore, the system can respond with corresponding speech dialogues (step S505).

Further, the system determines that a subject of dialogues is related to environment based on the semantics of the user and then determines whether or not to acquire environmental information (step S507). If it is determined that there is no need to acquire the environmental information (representative of "no"), the process repeats the above steps of speech dialogue service; otherwise, if it is determined that it is necessary to acquire the environmental information (representative of "yes"), a function for capturing image in the user device is activated by a software program executed in the user device. A camera (e.g., a main camera or a front camera) of the user device is activated to acquire environmental images (step S509), so that the camera is used to capture images of the environment around the user.

In the meantime, the system continuously receives the image data (step S511), and extracts image features from the image data relating to the environment around the user so as to determine the environmental features (step S513). According to one embodiment of the present invention, an image model or including a natural language model (e.g., a multimodal mode) is used to extract the image features and then generate the images to be displayed based on the image features. The images can be displayed on the dialogue interface (step S515). The further speech dialogues can be correspondingly generated based on the environmental features (step S517).

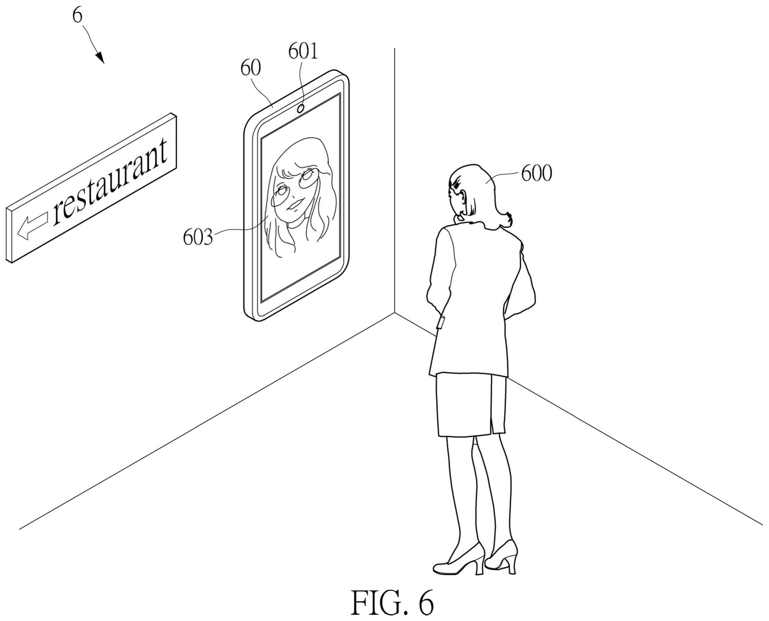

Reference is made to Fig. 6, which is a schematic diagram depicting a scene where the method for adaptively acquiring the image data is performed to proceed personalized speech dialogue according to one embodiment of the present invention.

The user device is such as a simulated character exhibit board 60 disposed in a first scene 6. The simulated character exhibit board 60 is implemented by a computer system, in which a natural language model is provided, or a cloud server, which is connected with a network for adaptively acquiring the image data for performing the personalized speech dialogue service.

In the schematic diagram, a user 600 enters the first scene 6 (e.g., an entry of a restaurant), and the simulated character exhibit board 60 displays a simulated character 603 that is configured to make dialogues with the user 600. The dialogues may relate to an introduction, meals, ordering and booking of a restaurant. The simulated character exhibit board 60 includes a built-in camera 601 or externally connects with the camera that is configured to capture images that may cover background images of the user 600.

The user 600 can make dialogues with the simulated character 603. The simulated character exhibit board 60 or the cloud server continuously receives speech data and image data of the user 600, analyzes the speech data and the image data, and then generate speech dialogues and images to be displayed based on requirements of the user.

In the diagram, the simulated character exhibit board 60 can be implemented by a Kiosk that provides services to users. When a natural language model operated in the simulated character exhibit board 60 obtains the semantics from the speech data of the user, the simulated character exhibit board 60 can respond to the user with a natural language. When the speech dialogue service is in operation, an application program executed in the user device can actively activate a camera of the user device to capture images of environment if it is determined that it is necessary to obtain a subject of dialogues relating to environmental information based on the semantics of the user. Alternatively, if the subject of dialogues is related to the user based on the semantics of the user, the application program activates the camera to capture images of the user.

The simulated character exhibit board 60 in the restaurant is such as the Kiosk including a camera and a display. A system operated in the simulated character exhibit board 60 provides an intelligent customer service robot that meets requirements of the restaurant. A simulated character displayed on the display makes dialogues with the user (e.g., the customer). The camera will be activated if the system determines that the camera needs to be activated for capturing images of the user based on the semantics of the dialogues with the user. Afterwards, the system provides corresponding contents such as ordering of meals or suggestion of the meals.

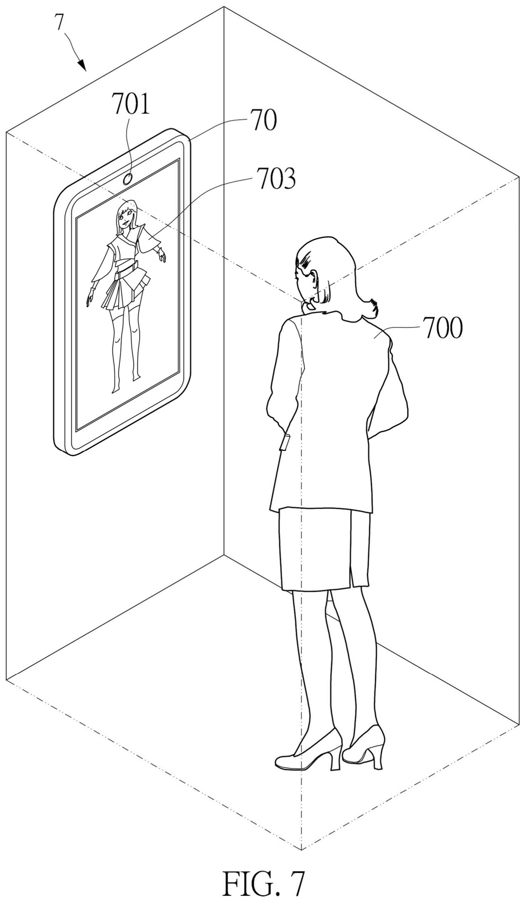

Fig. 7 shows a schematic diagram depicting another scene where personalized speech dialogues are conducted by adaptively acquiring an image data according to one embodiment of the present invention.

In the diagram, a user 700 enters a second scene 7 for making dialogues with a simulated character 703 displayed on a simulated character exhibit board 70. In the meantime, a camera 701 disposed on the simulated character exhibit board 70 is activated to capture images of the user 700 so as to acquire the image data of the user 700. The image data is analyzed for extracting image features therefrom, so that the dialogues and images to be displayed can be generated based on the speech features and the image features.

For example, the second scene 7 can be a clothing store that allows the user 700 to try on clothes. The system operated in the simulated character exhibit board 70 allows the user 700 to ask a model operated in the system for clothing suggestions in a natural language. When trying on clothes, the camera 701 of the simulated character exhibit board 70 is activated to capture images of a full body or partial body of the user 700 and the system can suggest clothing for the user based on the user's requirement that is analyzed from the image data. Further, through introduction made by the simulated character 703, an outfit image can be actually displayed on the simulated character exhibit board 70. In one embodiment of the present invention, a generative model can be used to generate a simulated outfit image of the user 700, for example, by combining an image data of clothing items and the user image, so that the user can easily acquire an image of himself trying on a cloth.

In conclusion, according to the above embodiments of the method for adaptively acquiring image data for personalized speech dialogues and the system of the present invention, an intelligent robot that can interact with the user is established, for example, the simulated character rendered by a simulated character model. Further, the function of capturing images in the user device can be activated as required for acquiring the speech features and the image features in real time. The user's requirement can then be acknowledged by analyzing the speech features and the image features. Accordingly, the system is able to provide the personalized speech dialogue service.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. A method for adaptively acquiring image data for personalized speech dialogues, operated in a cloud server (20), **characterized by** comprising:
receiving a speech data generated by a user in real time via a user device (100), extracting current speech features of the user, and recognizing semantics of the speech features by a natural language processing model;
activating a function for capturing images in the user device (100) after determining that the images are required to be captured so as to obtain an image data, and generating speech dialogues data based on the speech features and the image features; and
continuously generating the speech dialogues based on the speech features and the image features after repeatedly receiving the speech data generated by the user via the user device (100), extracting the speech features, receiving the image data generated by the user device (100) and extracting the image features.

2. The method according to claim 1, wherein, in addition to obtaining the semantics of the speech features, the speech features are also referred to for learning the user's current emotion and generating the speech dialogues based on the semantics and the user's current emotion, and the speech features comprise pitches, changes of rhythms and variations of sound intensities of the speech data transmitted from the user device (100).

3. The method according to claim 2, wherein the pitches, the changes of rhythms and the variations of sound intensities correspond to the user's current emotion are obtained by querying an emotion database (225).

4. The method according to claim 1, wherein, when a subject of dialogues related to environmental information is determined based on the semantics of the user, a function of capturing images in the user device (100) is activated to capture environmental images around the user, and the image features obtained from the environmental images of the user are referred to for determining environmental features, so that further speech dialogues corresponding to the environmental features are generated.

5. The method according to claim 1, wherein, when a subject of dialogues related to the user himself is determined based on the semantics of the user, a selfie function in the user device (100) is activated to capture images of the user.

6. The method according to claim 5, wherein the image features obtained from the selfie images of the user and the image features are referred to for determining the user's current emotion or needs, so that further speech dialogues corresponding to the user's current emotion or the needs are generated.

7. The method according to any of claim 1 to claim 6, wherein, in the cloud server (20), a deep-learning method is performed to learn interests and personality of the user based on the speech data and the image data in past and present that are continuously received from the user device (100) so as to establish a user profile.

8. The method according to claim 7, wherein, when the present speech features, the semantics and the image features of the user are obtained, the user profile is also obtained according to an identification data of the user, and the speech dialogues are generated based on the semantics, the user profile and/or the environmental information.

9. The method according to any of claim 1 to claim 6, wherein the cloud server (20) retrieves the simulated object generated by an Al simulation model (223) from a database (22); and, after image signals and model data are transmitted to the user device (100), the simulated object is displayed on a display of the user device (100), and the simulated object simulates speaking the speech dialogues.

10. The method according to claim 9, wherein the simulated object is a simulated humanoid chatbot, and the cloud server (20) provides an interactive interface initiated by a web server for providing options of multiple simulated humanoid chatbots.

11. A system, which is used to operate a method for adaptively acquiring image data for personalized speech dialogues, **characterized by** comprising:
a cloud server (20), connecting with a user device (100), providing a personalized speech dialogue service to a user via a dialogue interface and performing the method for adaptively acquiring image data for personalized speech dialogues by one or more processors, wherein the method comprises:
receiving a speech data generated by the user in real time via the user device (100), extracting current speech features of the user, and recognizing semantics of the speech features by a natural language processing model;
activating a function for capturing images in the user device (100) after determining that the images are required to be captured so as to obtain an image data, and generating speech dialogues data based on the speech features and the image features; and
continuously generating the speech dialogues based on the speech features and the image features after repeatedly receiving the speech data generated by the user via the user device (100), extracting the speech features, receiving the image data generated by the user device (100) and extracting the image features.

12. The system according to claim 11, wherein the speech features corresponding to the user's current emotion are obtained by querying an emotion database (225), the personalized speech dialogues are generated based on the required changes in pitch, rhythm, and intensity of speech of the speech features; and, in addition to obtaining semantics of the speech features, the speech features are also referred to for learning the user's current emotion and also generating the speech dialogues based on the semantics and the user's current emotion.

13. The system according to claim 11, wherein, in the method for adaptively acquiring image data for personalized speech dialogues, when a subject of dialogues related to environmental information is determined based on the semantics of the user, a function of capturing images in the user device (100) is activated to capture environmental images around the user, and the image features obtained from the environmental images of the user are referred to for determining environmental features, so that further speech dialogues corresponding to the environmental features are generated.

14. The system according to claim 11, wherein, in the method for adaptively acquiring image data for personalized speech dialogue, when a subject of dialogues related to the user himself is determined based on the semantics of the user, a selfie function in the user device (100) is activated to capture images of the user, and the image features obtained from the selfie images of the user and the image features are referred to for determining the user's current emotion or needs, so that further speech dialogues corresponding to the user's current emotion or the needs are generated.

15. The system according to any of claim 11 to claim 14, wherein, in the cloud server (20), a deep-learning method is performed to learn interests and personality of the user based on the speech data and the image data in past and present that are continuously received from the user device (100) so as to establish a user profile; and, when the present speech features, the semantics and the image features of the user are obtained, the user profile is also obtained according to an identification data of the user, and the speech dialogues are generated based on the semantics, the user profile and/or the environmental information.
